# EUROPEAN PATENT APPLICATION

(11) **EP 1 291 933 A1**
(43) Date of publication of application: **12.03.2003**
(21) Application number: 01203350.2
(22) Date of filing: 05.09.2001
(51) Int. Cl.: H01M 2/02, C25D 3/56

(54) **Method of manufacturing a steel sheet for a battery case**

(71) Applicant: Thomas Steel Strip Corporation, Warren, Ohio 44485 (US)
(72) Inventor: Mooij, Joop Nicolaas, 1902 JP Castricum (NL); Wijenberg, Jacques Hubert Olga Joseph, 1019 PE Amsterdam (NL)
(74) Representative: Hansen, Willem Joseph Maria

(57) **Abstract**

The invention relates to a method of manufacturing a steel sheet for a battery case, which method comprises the steps of (a) providing a steel sheet suitable for use in a battery case, (b) pre-treating of the surface of the steel sheet, and (c) plating a metal layer comprising nickel onto at least one said surface of the steel sheet, and whereby during step (c) said metal layer comprising nickel is deposited by electroplating both nickel and bismuth using an aqueous plating bath comprising a nickel-ion concentration in a range of 10 to 100 g/l and a bismuth-ion concentration in the range of 0.01 to 10 g/l. The invention relates further to a battery case manufactured therefrom, and to an aqueous plating bath for use in the method of this invention.

## Description

The invention relates to a method of manufacturing a steel sheet for a battery case, which method comprises the steps of providing a steel sheet suitable for use in a battery case, pre-treating of the surface of the steel sheet, and plating a metal layer comprising nickel onto at least one said outersurface of the steel sheet. The invention relates further to a battery case manufactured therefrom. The invention further relates to an aqueous plating bath for use in the method of this invention.

In recent years, as portable devices have become increasingly widespread, the demand for miniature batteries and secondary batteries has increased. The majority of primary batteries are manganese batteries or alkali manganese batteries or lithium batteries, and large numbers of these are used depending on the respective applications. Frequently, nickel plated sheet material is used for these batteries since nickel has an excellent corrosion resistance to e.g. alkaline potassium hydroxide. Furthermore, nickel is suitable for batteries since nickel has steady contact resistance when the battery is connected with an external terminal. And, nickel has excellent spot welding properties in case reach component is spot welded when assembled into a battery in a battery manufacturing process.

European patent application no. EP-1111697 discloses a surface-treated steel sheet for battery cases and a method for producing them. The method includes that a steel sheet suitable for battery cases is being pre-treated by means of degreasing and pickling, thereafter a thin layer of nickel is applied by means of electroplating, and on the nickel layer there is applied a layer of bismuth by means of electroplating also. The thickness of the applied nickel layer is in the range of 1 to 10µm, and the thickness of the bismuth layer is in the range of 0.01 to 1.0µm. In the examples supporting the application the thickness of the applied nickel layer is 2.2µm and the thickness of the applied bismuth layer is 0.22µm, such that the weight ratio of nickel to bismuth is about 10:1. The pH of the plating bath for the nickel was about 4.0 and had a temperature of about 58°C, whereas the plating bath for the bismuth had a pH of 0.5 and a temperature of about 22°C. In order to achieve a good adhesion of the nickel and bismuth metal layers on the steel sheet, it is required that the nickel layer is applied first on the surface of the steel sheet. Following the application of the two different metal layers, the steel sheet is heated to a temperature in the range of 300 to 650°C for 240 to 600 min. in an inert or non-oxidising gas atmosphere to form the desired iron-nickel and nickel-bismuth diffusion layers at their interfaces. These diffusion layers result in an increased alkali resistance and can sustain a discharge level over a long period of time when the steel sheet is used for the inner side of a battery case or battery can.

A disadvantage of the known method is that the method requires multiple plating steps, and thereby different plating baths for the electroplating of the metal layers, each plating bath having its own specific operation conditions.

It is an object of the present invention to provide a method of manufacturing steel sheet for a battery case or battery can, in which method the nickel and the bismuth are applied in an alternative manner compared to the method known from EP-1111697.

It is also an object of the invention to provide an aqueous plating bath for use in the method according to the invention and which plating bath can be employed in an industrial environment.

In accordance with the invention in one aspect there is provided a method of manufacturing a steel sheet for a battery case, which method comprises the steps of (a) providing a steel sheet suitable for use in a battery case, preferably cold rolled steel sheet, (b) pre-treating of the outersurface of the steel sheet, and (c) plating a metal layer comprising nickel onto at least one said outersurface of the steel sheet. This method is characterised in that during step (c) said metal layer comprising nickel is deposited by electroplating both nickel and bismuth using an aqueous bath comprising a nickel-ion concentration in a range of 10 to 100 g/l and a bismuth-ion concentration in the range of 0.01 to 10 g/l.
In accordance with the invention it has been found that the elements nickel and bismuth, which are required to form the diffusion layers in a subsequent heat treatment of the steel sheet, can be deposited in one single plating step using a stable aqueous bath having both nickel and bismuth in the defined concentrations, resulting in a simplified plating step using only one plating bath at one essentially constant temperature and pH, and resulting also in significant cost reductions. The resultant Ni-Bi alloy layer is at least equally good in providing the desired alkaline resistance in a battery case as two separately applied metal layers known from the prior art.

In an embodiment of the method according to the invention this method is characterised in that during step (c) said layer comprising nickel is being deposited by plating both nickel and bismuth using an aqueous bath comprising a nickel-ion concentration in a range of 20 to 80 g/l and a bismuth-ion concentration in the range of 0.04 to 6 g/l.

The nickel-ion concentration can be added to the aqueous bath via the addition of nickel chloride, nickel fluoborate, nickel sulfamate, nickel acetate or nickel suplhate. However, there is a preference to use the addition of nickel sulfate (NiSO₄.6H₂O ). At a too high level of nickel salt in the aqueous bath there is the risk of the crystallisation of the salt in the solution, which might damage a continuous process. At too low levels the resultant bath becomes uneconomical due to too long plating times and low current density.

Bismuth-ion in the concentration set out above can be added in various ways to the aqueous bath. In theory many bismuth compounds could be used for this purpose. However, many bismuth compounds have been tried out but only a very few appear to provide reliable and reproducible results. For example the addition of bismuth acetate has been tried, but it has been found that this compound did not dissolve in the plating bath used, whereas the addition of lead acetate did not result in any problems with respect to having this compound dissolved. For example also the combination of a bath of nickel-ions and bismuth-ions and a tartrate at a pH in the range of more than 8 resulted in the formation of an undesirable Ni containing sludge. This Ni containing sludge did not re-dissolve upon heating, indicating amongst others that Ni is unstable in the presence of a tartrate in the mentioned pH range. In accordance with the invention very good results have been obtained when Bi-ions are being added via the addition of one or more of the group consisting of bismuth carbonate (Bi₂(CO₃)₃), bismuth oxide (Bi₂O₃), bismuth citrate (BiC₆H₅O₇) and bismuth chloride (BiCl₃). Optionally some sodium hydroxide may be added also to regulate the pH of the aqueous bath. By using bismuth carbonate or bismuth oxide in the presence of nickel a suitable plating bath has been obtained which is stable at a very wide pH range.

In an embodiment of the method of the invention during step (c) said layer comprising nickel is being deposited by plating both nickel and bismuth using an aqueous bath having:-
- a pH in the range of 2.5 to 10, and
- comprising a nickel-ion concentration in a range of 10 to 100 g/l, and preferably in a range of 20 to 80 g/l,
- a bismuth-ion concentration in the range of 0.01 to 10 g/l, and preferably in the range of 0.02 to 6 g/l,
- a citrate-ion concentration in the range of 40 to 150 g/l, and preferably in the range of 80 to 110 g/l,
- a gluconate-ion concentration in the range of 2 to 80 g/l, and preferably in the range of 4 to 50 g/l,
- a chloride- or fluoride-ion concentration in the range of 1 to 50 g/l, and preferably in the range of 1 to 30 g/l.
This aqueous plating bath demonstrated to be operational in a very wide pH range, and can be used on industrial scale coil plating lines using a high current density, which in turn allows for fairly high line speeds. Further advantages of this plating bath are that it does not generate any ammonia fumes, it can be composed using standard and readily available chemicals, and bismuth can easily be replenished to the plating bath from a bismuth concentrate or otherwise.

Baths using the following salts have proved particularly effective, in grams per litre:-
- Nickel sulphate in a range of 45 to 450 g/l, and preferably 90 to 315 g/l,
- Chloride-ion concentration in a range of 1 to 50 g/l, and preferably 1 to 30 g/l,
- Sodium citrate in a range of 55 to 180 g/l, and preferably 110 to 150 g/l,
- Sodium gluconate in range of 2 to 90 g/l, and preferably 5 to 55 g/l,
- Ammonium sulphate in a range up to 270 g/l,
- Bismuth oxide in a range of 0.02 to 22 g/l, and preferably 0.05 to 13 g/l, or Bismuth carbonate in a range of 0.03 to 29 g/l, and preferably 0.06 to 17 g/l.

The addition of an ion from the group consisting of chloride and fluoride is required for inducing anode corrosion. A suitable source of chloride-ion concentration can be done by the addition of nickel chloride (NiCl₂.6H₂O) in a range of up to 415 g/l, and preferably in a range up to 250 g/l.

(H⁺) or (OH⁻) can be added to regulate the pH in a range of 2.5 to 10. The use of ammonium hydroxide should preferably be avoided in view of the generation of ammonia fumes.

Optionally for reducing stress in the deposit layer comprising both the Ni and Bi an ammonium-ion concentration in a range up to 40 g/l, and preferably in range of 1 to 25 g/l, or a triethenalamine-ion concentration in a range of up to 40 g/l, or combinations thereof, or other equivalent components may be added to the aqueous bath. Any soluble ammonium salt can be used as a source of NH₄⁺.

The plating bath used in the method according to the invention can operate in a wide pH range of 2.5 to 10, and preferably in the range of 4 to 8, without affecting the properties of the bath and without dissolving the steel sheet or any other metal layer thereon.

The method according to the invention is preferably employed using a plating bath having a temperature in the range of 30 to 70°C, and more preferably in the range of 40 to 65°C, in order to achieve higher current efficiency. In this temperature range the ion-mobility increases and there is no need to cool the plating bath to compensate for the heat generation during plating, and high current efficiencies are obtained in this temperature range.

The steel sheet for a battery case or battery can is preferably cold rolled steel sheet having a thickness in the range of 0.08 to 1 mm, whereas the applied Ni-Bi metal layer has preferably a thickness in the range of 0.5 to 6µm, and preferably 1 to 4µm, and may be applied on one or on both sides of the steel sheet.

The invention further relates to an aqueous bath for the electro-deposition of a layer comprising both nickel and bismuth on a steel sheet for a battery case, having:-
- a pH in the range of 2.5 to 10, and
- comprising a nickel-ion concentration in the range of 10 to 100 g/l, and preferably in a range of 20 to 80g/l,
- a bismuth-ion concentration in the range of 0.01 to 10 g/l, and preferably in a range of 0.04 to 6 g/l,
- a citrate-ion concentration in the range of 50 to 150 g/l, and preferably in a range of 80 to 110 g/l,
- a gluconate-ion concentration in the range of 2 to 80 g/l, and preferably in a range of 4 to 50 g/l,
- a chloride- or fluoride-ion concentration in the range of 1 to 50 g/l, and preferably in a range of 1 to 30 g/l.
This aqueous plating bath demonstrated to be operational in a very wide pH range, and in a wide temperature range, and further can be used on industrial scale coil plating lines using a high current density, which in turn allows for fairly high line speeds. Further advantages of this plating bath are that it does not generate any ammonia fumes, it can be composed used standard and readily available chemicals, and the bismuth concentration can easily be replenished to the aqueous plating bath from a bismuth concentrate or otherwise.

The adhesion of the single metal alloy layer comprising both the nickel and bismuth to the steel sheet is good, but may be further improved by a proper pre-treatment step (b) of the outersurface of the steel sheet on which the Ni-Bi layer is being deposited. The pre-treatment comprises a preliminary cleaning step during which the surface is made free from grease, oil, or buffing compounds. This can be accomplished in many ways, and can be accomplished by known techniques, amongst others by alkaline cleaning, vapour degreasing, solvent washing, or solvent emulsion cleaning. Also a mild etching or pickling may be employed.

In a further aspect of method according to the invention, following the application of a metal layer comprising both nickel and bismuth on at least one side of the outersurface of the steel sheet in accordance with the method set out above, the steel sheet is subjected to a heat treatment by holding the steel sheet at a temperature in the range of 300 to 700°C for 20 sec. to 10 hours in an inert or non-oxidising gas atmosphere to form the iron-nickel and nickel-bismuth diffusion layers. The temperature and time are dependent on the steel sheet quality and the furnace type used. This heat treatment or annealing causes the steel sheet to recrystallize and the deposited layer to form the desired diffusion layers. In addition the annealing also results in a further improved adhesion of the applied Ni-Bi layer to the steel sheet, which is desirable for the subsequent forming operations of the Ni-Bi plated sheet material into battery cases or battery cans, and furthermore results in improved corrosion protection of the product. And since in the method according to the invention a Ni-Bi alloy is plating instead of two separate metal layers, the heat treatment to obtain the diffusion barriers can be significantly reduced.

In a further aspect of the invention the invention is embodied in a battery case or battery can made from a steel sheet manufactured with the method according to the invention and having the Ni-Bi coating on its inner side to obtain the good corrosion resistance and having higher minimum discharge time compared to a pure nickel coating only. Furthermore, the invention relates to a battery comprising such a battery case or battery can.

### Example.

On a laboratory scale battery-grade steel sheets of gauge 0.4 mm have been pretreated and plated with nickel. It appears rather impracticable to determine the plating window in a strip plating line. However, a rotating cylinder electrode ("RCE") is very suitable for this purpose, because the mass transfer rate is well defined by its rotation speed, namely the mass transfer rate is proportional to the rotation speed to the power 0.7. And furthermore, the mass transfer rate can be translated to a certain strip speed in a strip plating line.

The diameter of the cylinders used was 73 mm and the height was 113 mm. The cylinders were degreased by immersion in dichloromethane for at least 900 sec., rinsed and dried by hot air. The counter-electrode was a Ti/IrO₂ (s) electrode. The nickel plating bath had the composition of Table 1 and having a pH of 5.5. The Bi-ion concentration has been added to the plating bath using a Bi-ion concentrate of 160 g/l sodium hydroxide, 300 g/l sodium gluconate and 110 g/l bismuth oxide. The bismuth oxide could have been replaced also by bismuth carbonate. Following the plating operation the Ni and Bi contents were analysed by ICP.

The process parameters used and the resultant Bi-content in the coatings have been summarised in Table 2 in which the rotational speed has been varied. A plating time of 30 sec. resulted in a Ni-Bi coating thickness of 1µm. However, by increasing the plating time, obviously, thicker coatings will be obtained. From the experiments it has been found that for a fixed set of parameters the Bi-weight in the coating increases linearly with the mass transfer rate which is proportional to the rotational speed as et out above, and whereas the Ni-weight in the coating is independent on the mass transfer rate, which may be expected since the applied current density is always lower than the limiting current density for the reduction of Ni²⁺.

In further experiments it has been found that for a fixed set of parameters the Bi-content in the coating is almost constant over a broad range of high current densities (600 to 2500 Am⁻²), but strongly increases when the current density is low (500 Am⁻² or less). Furthermore, it has been found that for a fixed set of parameters the Bi-content in the coating is directly proportional to the bismuth content in the plating bath doubling the content of Bi-ions in the plating bath results in doubling the amount of Bi in the Ni-Bi coating. And it has been found that for a fixed set of parameters the current density drops strongly from 85-90% at 50 to 60°C to about 75% at 40°C, and even to significant lower values when the temperature is lowered to below 40°C.

**Table 1.**

| **Compound** | **Concentration [g/l]** |
|---|---|
| Nickel sulphate | 142 |
| Ammonium sulphate | 34 |
| Nickel chloride | 30 |
| Sodium citrate | 140 |
| Sodium gluconate | 30 |
| Bismuth ions | 0.5 |

**Table 2.**

| **Rotational speed [ rpm ]** | **Plating time [sec.]** | **Bath temp. [ °C ]** | **Current density [ Am** ^{**-2**}**]** | **Bi-content in coating [ wt.% ]** |
|---|---|---|---|---|
| 435 | 30 | 50 | 1000 | 4.0 |
| 598 | 30 | 50 | 1000 | 4.6 |
| 776 | 30 | 50 | 1000 | 5.7 |

Having now fully described the invention, it will be apparent to one of ordinary skill in the art that many changes and modifications can be made without departing from the spirit or scope of the invention as herein described.

## Claims

1. A method of manufacturing a steel sheet for a battery case, which method comprises the steps of (a) providing a steel sheet suitable for use in a battery case, (b) pre-treating of the surface of the steel sheet, and (c) plating a metal layer comprising nickel onto at least one said surface of the steel sheet, **characterised in that** during step (c) said metal layer comprising nickel is deposited by electroplating both nickel and bismuth using an aqueous plating bath comprising a nickel-ion concentration in a range of 10 to 100 g/l and a bismuth-ion concentration in the range of 0.01 to 10 g/l.

2. A method according to claim 1, wherein during step (c) said metal layer comprising nickel being deposited by plating both nickel and bismuth using an aqueous bath having a pH in the range of 2.5 to 10, and comprising
a nickel-ion concentration in a range of 10 to 100 g/l,
a bismuth-ion concentration in the range of 0.01 to 10 g/l,
a citrate-ion concentration in the range of 40 to 150 g/l,
a gluconate-ion concentration in the range of 2 to 80 g/l,
a chloride- or fluoride-ion concentration in the range of 1 to 50 g/l.

3. A method according to claim 1 or 2, wherein the Bi-ion concentration in the aqueous bath results from the dissolution of one or more from the group consisting of bismuth carbonate, bismuth oxide, bismuth citrate and bismuth chloride.

4. A method according to any one of claims 1 to 3, wherein the temperature of the aqueous bath during plating is in the range of 30 to 70°C.

5. A method of manufacturing a steel sheet for a battery case, wherein following the application of a metal layer comprising both nickel and bismuth on at least one side of the outersurface of the steel sheet in accordance with the method of any one of claims 1 to 5, the steel sheet is subjected to a heat treatment by holding the steel sheet at a temperature in the range of 300 to 700°C for 20 sec. to 10 hours in an inert or non-oxidising gas atmosphere to form the iron-nickel and nickel-bismuth diffusion layers.

6. An aqueous bath for the electrodeposition of a layer of both nickel and bismuth on a steel sheet for a battery case, the bath having a pH in the range of 2.5 to 10, and comprising:-
a nickel-ion concentration in a range of 10 to 100 g/l,
a bismuth-ion concentration in the range of 0.01 to 10 g/l,
a citrate-ion concentration in the range of 50 to 150 g/l,
a gluconate-ion concentration in the range of 2 to 80 g/l,
a chloride- or fluoride-ion concentration in the range of 1 to 50 g/l.

7. Use of the aqueous bath of claim 6 for the manufacturing of Ni-Bi alloy coated steel sheet for a battery case.

8. Cold rolled steel sheet for battery cases or battery cans having an electro-deposited layer of nickel-alloy consisting of nickel and 2 to 15 wt.% of bismuth, and wherein said electro-deposited layer has a thickness in the range of 0.5 to 6µm.

9. Battery case or battery can from a steel sheet manufactured in accordance with any one of claims 1 to 5.

10. Battery comprising a battery case in accordance with claim 9.
